# DEMANDE DE BREVET EUROPEEN

(11) **EP 1 041 408 A1**
(43) Date de publication de la demande: **04.10.2000**
(21) Numéro de dépôt: 00400865.2
(22) Date de dépôt: 29.03.2000
(51) Int. Cl.: G02B 5/30, G02B 5/18

(54) **Filtre polarisant et son procédé de fabrication**

(30) Priorité: 30.03.1999 FR 9903974
(71) Demandeur: Jobin Yvon S.A., 91160 Longjumeau (FR)
(72) Inventeur: Laude, Jean-Pierre, 91690 Saint Cyr La Rivière Par Saclas (FR)
(74) Mandataire: Michelet, Alain

(57) **Abrégé**

L'invention concerne un filtre polarisant par transmission comportant un substrat (1) et un réseau (2) partiellement métallisé porté par ce substrat (1).

Le réseau est un réseau holographique, qui a un profil (3) ayant des facettes (4, 5) de pentes alternativement positives (4) et négatives (5), l'un des ensembles de ces facettes de pente positive ou négative étant partiellement métallisé.

Le filtre est fabriqué en réalisant un réseau holographique sur un substrat, en le métallisant et en l'usinant partiellement par usinage ionique.

## Description

L'invention concerne un filtre polarisant et son procédé de fabrication.

Les filtres polarisants reçoivent de nombreuses applications optiques, soit pour former des flux lumineux polarisés, soit pour sélectionner dans un flux lumineux porteur de polarisations diverses, l'une d'entre elles présentant un intérêt particulier.

Certains matériaux transparents, au moins dans un domaine spectral donné, ont des propriétés polarisantes et les premiers filtres polarisants ont été réalisés avec de tels matériaux. On considère généralement des polarisations linéaires.

Plus récemment, de nombreuses techniques ont été développées et en particulier il a été proposé (par exemple dans le brevet américain US-3.046.839) de réaliser des structures incluant des grilles métallisées pour la fabrication de polariseurs.

Le but de l'invention est de proposer un tel filtre et son procédé de fabrication qui ait un fort coefficient de transmission globale et offre un ratio très élevé entre le flux lumineux polarisé dans une direction dont la transmission est maximum et le flux polarisé dans la direction perpendiculaire dont l'atténuation est la plus forte. De préférence, on recherche que ce taux soit uniforme dans un domaine spectral étendu.

La présente invention concerne donc un filtre polarisant par transmission comportant un substrat et un réseau partiellement métallisé et porté par ce substrat.

Selon l'invention, le réseau est un réseau holographique, il a un profil ayant des facettes de pentes alternativement positives et négatives, et l'un des ensembles de ces facettes de pentes positives ou négatives est partiellement métallisé.

Dans différents modes de réalisation présentant chacun ses avantages spécifiques:
- le profil du réseau est sinusoïdal,
- la longueur d'onde centrale de la bande d'utilisation du polariseur étant λ, le pas du réseau est environ λ/2,
- la profondeur des traits du réseau est de l'ordre de λ/10,
- le nombre de traits du réseau par mm est compris entre 3000 et 5500, la profondeur de modulation des traits est comprise entre 30 et 70 nm, la couche métallique a une épaisseur maximale comprise entre 10 et 40 nm.

L'invention concerne également un procédé de fabrication d'un tel filtre polarisant qui comporte les étapes suivantes:
- fabrication du réseau holographique sur un substrat,
- dépôt d'une couche métallique d'épaisseur uniforme sur le réseau holographique,
- attaque partielle de la couche métallique par usinage ionique.

Dans différents modes de réalisation préférés, présentant chacun leurs avantages spécifiques:
- la couche métallique est une couche d'argent,
- l'usinage ionique est réalisé avec une inclinaison du substrat par rapport au faisceau ionique compris entre 30 et 80°,
- le réseau est formé dans une couche de résine époxy,
- le réseau est formé dans une couche de photorésist.

L'invention sera décrite ci-après en détail, en référence aux dessins sur lesquels:

La Figure 1 illustre l'état du futur polariseur au cours de son procédé de fabrication.
- La Figure 1A représente le réseau sur son substrat.
- La Figure 1B représente le réseau métallisé uniformément.
- La Figure 1C représente le polariseur terminé, après usinage ionique.

La Figure 2 représente une installation d'usinage ionique du polariseur.

La Figure 3 représente les résultats comparés d'un polariseur dans un premier exemple de réalisation de l'invention par rapport aux résultats obtenus avec un réseau non métallisé.

La Figure 4 est un deuxième exemple de réalisation de l'invention comparé avec les résultats obtenus avec un réseau non métallisé et avec un réseau entièrement métallisé (avant usinage ionique).

Le filtre polarisant de l'invention est destiné à fonctionner dans un domaine de longueur d'onde particulier, centré sur la longueur d'onde λ.

On cherche à ce que ce domaine de longueur d'onde puisse être particulièrement étendu et que les propriétés du filtre soient aussi uniformes que possibles sur toute l'étendue de ce domaine.

Le substrat 1 est réalisé dans un matériau ayant un bon coefficient de transmission dans ce domaine spectral et ayant une bonne stabilité thermique dimensionnelle.

Sur ce substrat 1 est formé un réseau holographique 2 réalisé de manière conventionnelle soit dans une couche de résine époxy, soit dans une couche de photorésist. Les matériaux sont ceux couramment utilisés pour la fabrication des réseaux holographiques, on pourra par exemple se référer à l'article intitulé « New Vistas for Diffraction Gratings » J.M. Lerner et J.P. Laude, publié le 31 Mai 1983 dans la revue Electro Optics et à ceux qu'il cite pour disposer de précisions complémentaires sur ces matériaux.

Ce réseau holographique peut être formé soit directement dans cette couche photosensible, soit à l'aide d'une matrice dont il constitue alors une réplique. Son profil est avantageusement sinusoïdal, toutefois en fonction de l'évolution des techniques et des contraintes économiques, il est possible sans sortir du cadre de l'invention d'utiliser des profils plus sophistiqués, également accessibles par les techniques conventionnelles de fabrication des réseaux holographiques.

Le pas du réseau est tel qu'il ne produit pas de dispersion en longueur d'onde observable dans le domaine de longueur d'onde considéré.

Le profil 3 du réseau 2 présente des facettes de pentes opposées alternativement positives 4 et négatives 5.

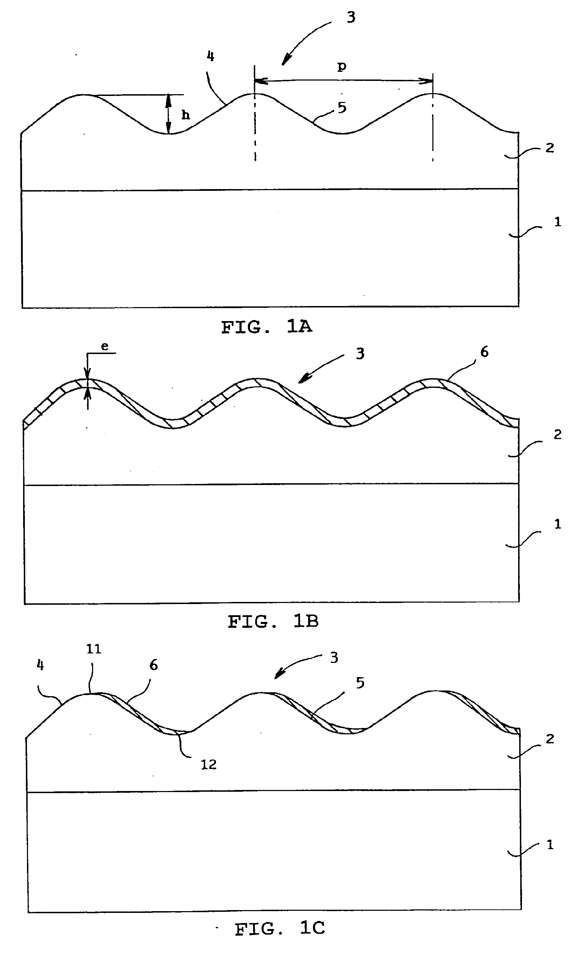

Ce réseau est recouvert d'une couche métallique 6 d'épaisseur uniforme e représenté sur la Figure 1B. Ce dépôt est réalisé par les méthodes habituelles de dépôt métallique sous vide.

Le réseau 2 ainsi métallisé est soumis à un usinage ionique sous un angle d'inclinaison compris entre 30 et 80°, de préférence de l'ordre de 55°.

On comprend que cet angle est celui formé par le substrat supposé plan et éventuellement approché par le plan tangent en son sommet et le faisceau ionique.

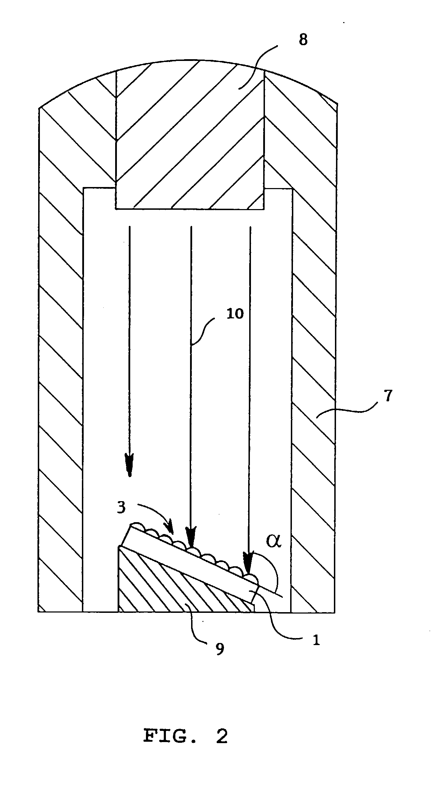

Une installation d'usinage ionique est représentée sur la Figure 2, elle comporte une enceinte 7, une source ionique 8 et un porte-échantillon 9. Le porte-échantillon 9 a une configuration géométrique telle qu'il permet de réaliser l'angle d'inclinaison α entre la direction du faisceau ionique 10 et le plan du substrat 1.

Cette disposition permet d'obtenir le profil approximativement représenté sur la Figure 1C pour la couche métallique 6. Cette couche a complètement disparu des faces 4 de pente positive et présente sur les faces 5 de pente négative une épaisseur croissante depuis le sommet 11 d'un trait du réseau et diminue à nouveau au niveau du creux 12.

Deux exemples de réalisation seront donnés ci-après pour faire apparaître la qualité des résultats ainsi obtenus. Dans les deux cas, les polariseurs réalisés sont destinés à fonctionner dans un domaine spectral s'étendant autour du visible de l'ultraviolet au proche infrarouge.

| | Premier exemple | Deuxième exemple |
|---|---|---|
| Nombre de traits au mm | 2400 | 4320 |
| Angle d'incidence du traitement ionique | 50-60° | 50-60° |
| Figures | 3A-B | 4A-B |

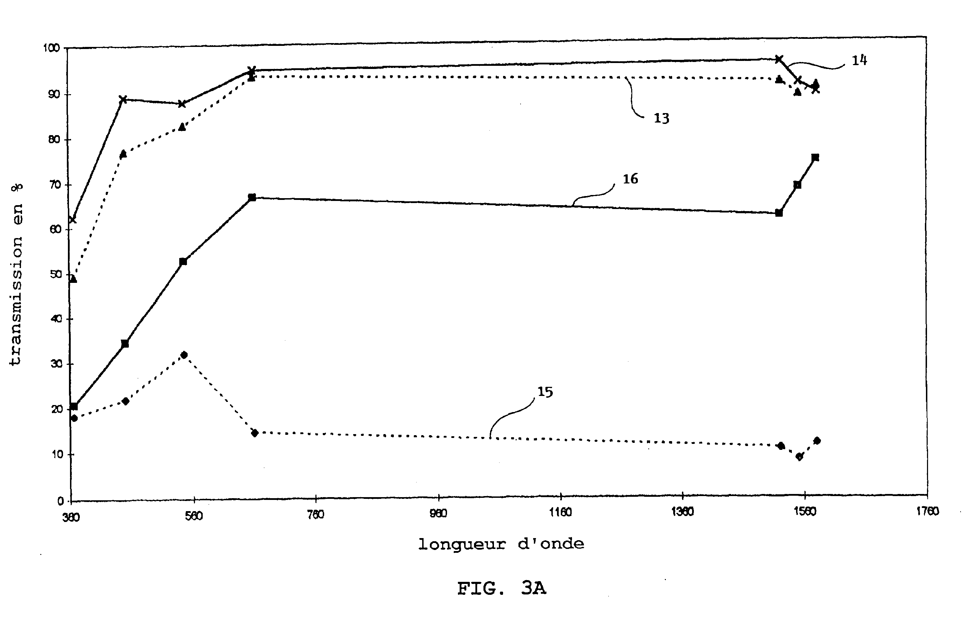

La Figure 3A représente le coefficient de transmission de chacune des polarisations linéaires prévues respectivement parallèle et perpendiculaire du polariseur de l'exemple 1 en fonction de la longueur d'onde représentée en abscisses.

Les courbes 13 et 14, utilisées à titre de référence sont les courbes de transmission, respectivement des polarisations parallèle et perpendiculaire en l'absence de traitement métalliques. Le polariseur de l'invention permet d'obtenir des coefficients de transmission pour les polarisations respectivement parallèle et perpendiculaire référencées 15 et 16.

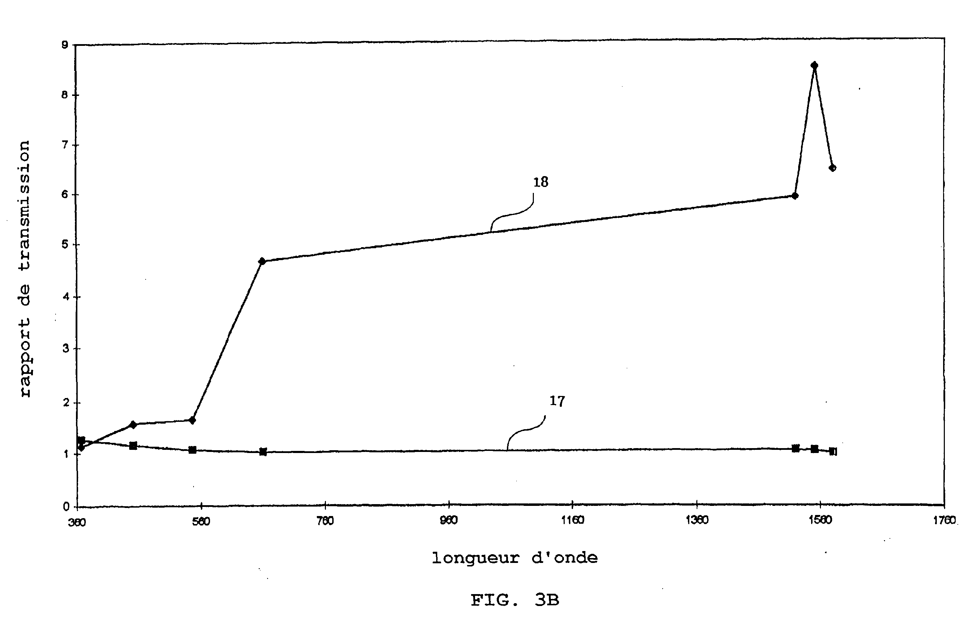

La Figure 3B représente les rapports de transmission obtenus respectivement sans traitement, donc en référence, 17 et avec traitement, selon l'invention, 18.

On constate donc que l'on obtient avec le polariseur de l'invention un rapport de transmission au taux relativement stable de 580 nm à 1500 nm et d'une valeur élevée située autour de 5.

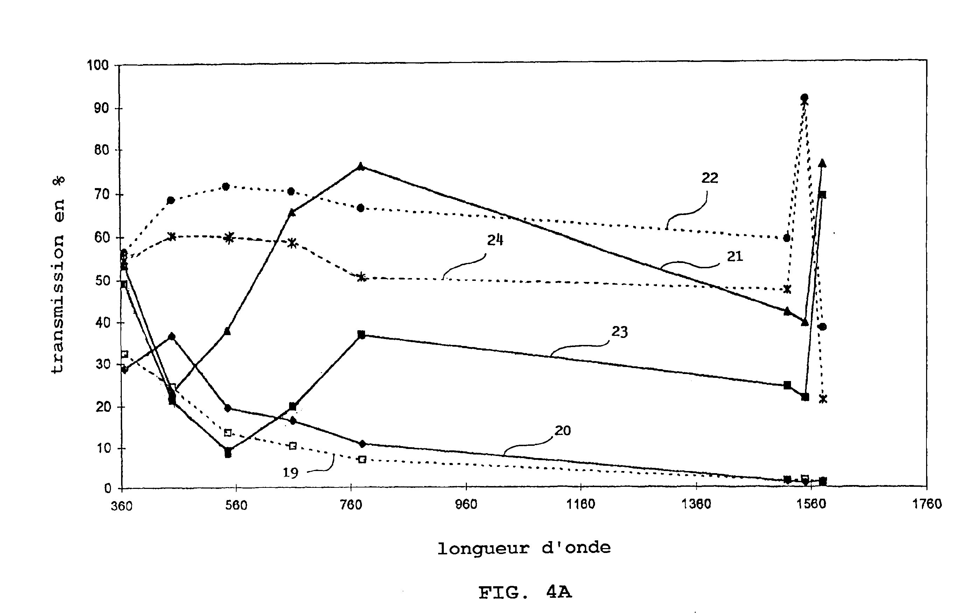

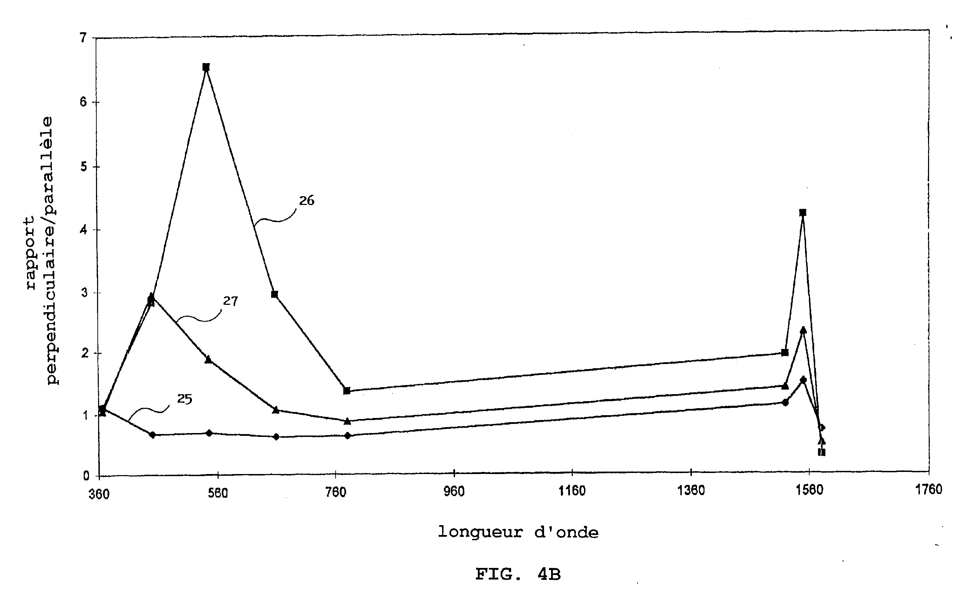

Les Figures 4A et 4B sont des représentations analogues correspondant au réseau précisé dans l'exemple 2 avec une troisième référence constituée par un réseau de même configuration géométrique entièrement métallisé.

Les courbes 19 et 20 sont des courbes de transmission pour un réseau non traité, les courbes 21 et 22 sont les courbes obtenues avec un réseau entièrement métallisé et les courbes 23 et 24 sont celles obtenues selon l'invention.

Sur la Figure 4B, sont représentés les rapports de transmission entre les flux polarisés respectivement parallèlement et perpendiculairement, la courbe 25 représente ce rapport en l'absence de traitement, la courbe 27 en présence d'une métallisation complète, et la courbe 26 selon l'invention.

Pour améliorer les propriétés du polariseur, on peut avantageusement former deux réseaux, chacun partiellement métallisé étant disposé sur l'une des faces du substrat. On augmente ainsi le rapport des taux de transmission des polarisations.

On peut aussi étendre le domaine spectral d'utilisation du polariseur. A cet effet, alors que l'on a considéré jusqu'à présent un réseau parfaitement périodique, on peut réaliser un réseau présentant de lente variation de sa période dans la direction perpendiculaire aux traits. Cette variation progressive est suffisamment lente pour que localement, dans une zone donnée, le réseau apparaisse périodique, mais suffisamment significative pour que la période correspondante soit différente d'une zone à l'autre. Les propriétés spectrales des différentes des autres zones sont alors légèrement différentes les unes des autres et celles du polariseur, dans son ensemble, sont le cumul des propriétés de ces zones.

## Revendications

1. Filtre polarisant par transmission comportant un substrat (1), et un réseau (2) partiellement métallisé porté par ce substrat (1), caractérisé en ce que
le réseau est un réseau holographique, qu'il a un profil (3) ayant des sommets (11) et des creux (12) séparés par des facettes (4, 5) de pentes alternativement positives (4) et négatives (5), l'un des deux ensembles de ces facettes de pentes positives ou négatives étant partiellement métallisé, la métallisation étant d'épaisseur croissante en s'éloignant du sommet vers le creux et décroissant à nouveau au niveau du creux vers la facette de pente opposée, l'autre ensemble étant sensiblement dépourvu de métallisation.

2. Filtre polarisant selon l'une des revendications 1 et 2, caractérisé en ce que le filtre ayant une bande spectrale d'utilisation centrée sur λ. le pas du réseau est de l'ordre de λ/2.

3. Filtre polarisant selon l'une quelconque des revendications 1 et 2, caractérisé en ce que le filtre ayant une bande spectrale d'utilisation centrée sur λ, la profondeur de modulation est de l'ordre de λ/10.

4. Procédé de fabrication d'un filtre polarisant selon l'une quelconque des revendications 1 à 3, caractérisé en ce qu'il comporte les étapes suivantes:
• fabrication d'un réseau holographique sur un substrat,
• dépôt partielle de la couche métallique par usinage ionique.

5. Procédé selon la revendication 4, caractérisé en ce que la couche métallique est une couche d'argent.

6. Procédé selon l'une quelconque des revendications 4 et 5, caractérisé en ce que l'usinage ionique est réalisé avec une inclinaison du substrat par rapport au faisceau ionique compris entre 30 et 80°C.

7. Procédé selon lune quelconque des revendications 4 à 6, caractérisé en ce que le réseau est formé dans une couche de résine époxy.

8. Procédé selon l'une quelconque des revendications 4 à 6, caractérisé en ce que le réseau est formé dans une couche de photorésist.
